# EUROPÄISCHE PATENTSCHRIFT

(11) **EP 2 734 567 B1**
(45) Veröffentlichungstag und Bekanntmachung des Hinweises auf die Patenterteilung: **09.09.2015**
(21) Anmeldenummer: 12735878.6
(22) Anmeldetag: 16.07.2012
(51) Int. Cl.: C08G 64/00, C08G 65/00

(54) **VERFAHREN ZUR AKTIVIERUNG VON DOPPELMETALLCYANIDKATALYSATOREN ZUR HERSTELLUNG VON POLYETHERCARBONATPOLYOLEN**
METHOD FOR ACTIVATING DOUBLE METAL CYANIDE CATALYSTS FOR THE PRODUCTION OF POLYETHER CARBONATE POLYOLS
PROCÉDÉ D'ACTIVATION DE CATALYSEURS À BASE DE CYANURE MÉTALLIQUE DOUBLE POUR PRODUIRE DES POLYOLS DE POLYÉTHERCARBONATE

(30) Priorität: 18.07.2011 EP 11174402
(43) Veröffentlichungstag der Anmeldung: 28.05.2014
(73) Patentinhaber: Bayer Intellectual Property GmbH, 40789 Monheim (DE)
(72) Erfinder: MÜLLER, Thomas, Ernst, 52062 Aachen (DE); GÜRTLER, Christoph, 50676 Köln (DE); DIENES, Yvonne, 30173 Hannover (DE); BARRUET, Julien, F-94260 Fresnes (FR); KÖHLER, Burkhard, 34289 Zierenberg (DE); LEITNER, Walter, 52074 Aachen (DE)
(74) Vertreter: BIP Patents
(86) Internationale Anmeldenummer: PCT/EP2012/063902
(87) Internationale Veröffentlichungsnummer: WO 2013/010987

(56) Entgegenhaltungen:
- EP-A2- 0 222 453
- WO-A1-98/52689
- WO-A1-03/066706
- WO-A1-2006/103214
- WO-A1-2008/058913
- WO-A1-2008/092767

## Beschreibung

Die vorliegende Erfindung betrifft ein Verfahren zur Aktivierung von Doppelmetallcyanid (DMC)-Katalysatoren mit Heterokumulenen für die Herstellung von Polyethercarbonatpolyolen durch katalytische Copolymerisation von Kohlendioxid (CO₂) mit Alkylenoxiden in Gegenwart einer oder mehrerer H-funktioneller Startersubstanzen. Gegenstand des vorliegenden Erfindung sind Verfahren gemäß den anhängenden Ansprüchen 1-12.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Startern) wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Startersubstanz ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie CO₂ zu einem Polymer darstellt. Als weiteres Produkt, eigentlich Nebenprodukt, entsteht das in Formel (I) gezeigte cyclische Carbonat (beispielsweise für R = CH₃ Propylencarbonat).

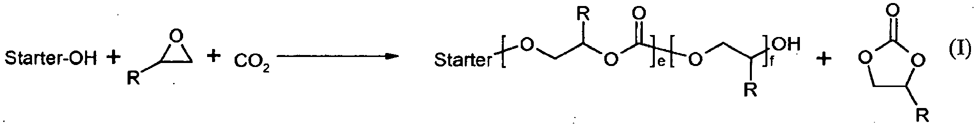

Als Aktivierung im Sinne dieser Erfindung wird ein Schritt bezeichnet, bei dem eine Teilmenge Alkylenoxidverbindung, gegebenenfalls in Gegenwart von CO₂, zum DMC-Katalysator gegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO₂ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von CO₂, zum DMC-Katalysator bis zum Auftreten der Wärmeentwicklung. Im Allgemeinen kann dem Aktivierungsschritt ein Schritt zum Trocknen des DMC-Katalysators und ggf. des Starters bei erhöhter Temperatur und/oder reduziertem Druck, gegebenenfalls unter Durchleiten eines Inertgases durch die Reaktionsmischung, vorgelagert sein.

Die Aktivierung eines DMC-Katalysators zum Zwecke der Homo-Polymerisation von Alkylenoxiden (d.h. in Abwesenheit von Kohlendioxid) ist bekannt. EP-A 0 981 407 offenbart die Aktivierung eines DMC-Katalysators zum Zwecke der Alkylenoxid Polymerisation. Das Erhitzen einer Mischung aus Katalysator und Starter unter Vakuum wird nun dadurch erweitert, dass gleichzeitig Inertgas durch die Mischung strömt oder dass das Erhitzen einer Mischung aus Katalysator und Starter unter Vakuum in Gegenwart eines organischen Lösemittels durchgeführt wird. Dies führt zu einer schnelleren Katalysator-Aktivierung und zu einer erhöhten Produkt-Qualität. Von Nachteil ist, dass der Einsatz eines Lösemittels zu erhöhten Kosten führt (Materialkosten für das Lösungsmittel sowie zusätzlicher Verfahrensschritt zur Entfernung des Lösungsmittels aus dem Produkt) und dass die Raum-Zeit-Ausbeute verringert ist. Die Verwendung bei der Copolymerisation von Kohlendioxid (CO₂) mit Alkylenoxiden in Gegenwart einer H-funktionellen Verbindung wird in EP-A 0 981 407 nicht offenbart.

EP-A 1474464 offenbart eine Verringerung der Induktionszeit zur Aktivierung des Katalysators um Polyether herzustellen, die dadurch erreicht wird, dass zu einer Mischung aus DMC-Katalysator und Starter ein Alkylenoxid bei einem internen Reaktordruck von weniger als 1 bar gegeben wird. Die Verwendung bei der Copolymerisation von Kohlendioxid (CO₂) mit Alkylenoxiden in Gegenwart einer H-funktionellen Verbindung wird in EP-A 0 981 407 nicht offenbart.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem CoKatalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 in den Beispielen 1 bis 7 angegebene Menge von 60 Gew.-% Alkylenoxidverbindung relativ zum Starter ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 (BASF) offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. CO₂-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% CO₂ bis maximal 42 Gew.-% CO₂ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

Demzufolge besteht Bedarf an einer verbesserten Aktivierung der DMC-Katalysatoren, die die Nachteile des Standes der Technik, wie insbesondere die herabgesetzte Katalysatoraktivität in Gegenwart von CO₂, die zeitraubende Aktivierung oder "unkontrollierte" Aktivierung des Katalysators unter CO₂ während der kontinuierlichen Zugabe von Alkylenoxiden, nicht aufweist. Die so aktivierten Katalysatoren sollen eine hohe Aktivität aufweisen und zu einem möglichst hohen Anteil an CO₂ im Polymer führen. Die Menge an entstehendem cyclischen Carbonat soll möglichst gering sein.

Es war daher Aufgabe der vorliegenden Erfindung, ein Verfahren zur Herstellung von Polyethercarbonatpolyolen bereitzustellen, welches sowohl zu einem hohen Gehalt an eingebautem CO₂ führt und gleichzeitig eine günstige Selektivität (d.h. niedriges Verhältnis von cyclischem Carbonat zu linearem Polyethercarbonat) des resultierenden Polyethercarbonatpolyols bewirkt.

Überraschend wurde gefunden, dass die erfindungsgemäße Aufgabe gelöst wird durch ein Verfahren zur Herstellung von Polyethercarbonatpolyolen aus einer oder mehreren H-funktionellen Startersubstanzen, eines oder mehrerer Alkylenoxide und Kohlendioxid in Gegenwart eines DMC-Katalysators, dadurch gekennzeichnet, dass der DMC-Katalysator in Gegenwart eines oder mehrerer Heterokumulene aktiviert wird. Gegenstand der Erfindung ist auch die Aktivierung von DMC-Katalysatoren, wobei der DMC-Katalysator in Gegenwart von Heterokumulen und gegebenenfalls H-funktioneller Startersubstanz aktiviert wird.

Gegenstand der Erfindung ist somit ein Verfahren gemäß Anspruch 1 zur Herstellung von Polyethercarbonatpolyolen aus einer oder mehreren H-funktionellen Startersubstanzen, eines oder mehrerer Alkylenoxide und Kohlendioxid in Gegenwart eines DMC-Katalysators, dadurch gekennzeichnet, dass
(α) unter Inertgasatmosphäre (beispielsweise Argon oder Stickstoff), unter einer Atmosphäre aus Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator mit Heterokumulen und H-funktioneller Startersubstanz vermischt wird,
(β) zu dem Gemisch aus Schritt (α) unter Inertgasatmosphäre (beispielsweise Argon oder Stickstoff), unter einer Atmosphäre aus Inertgas-Kohlendioxid-Gemisch oder unter einer reinen Kohlendioxid-Atmosphäre, Alkylenoxid bei Temperaturen von 90 bis 150°C, vorzugsweise von 125 bis 135°C zugegeben wird, und
(γ) ein oder mehrere Alkylenoxide und Kohlendioxid zu der aus Schritt (β) resultierenden Mischung fortwährend dosiert werden ("Copolymerisation"). Die für die Copolymerisation eingesetzten Alkylenoxide können gleich oder verschieden sein von den bei der Aktivierung eingesetzten Alkylenoxiden.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 5 bis 16,0 Gew.-% (bezogen auf die im Schritt (α) eingesetzte Menge an Startersubstanz). Das Alkylenoxid kann in einem Schritt oder schrittweise in mehreren Teilmengen zugegeben werden. Das Heterokumulen in Schritt (α) wird bevorzugt in einem Gewichtsverhältnis von DMC-Katalysator zu Heterokumulen von 1 : 150 bis 10 : 1, besonders bevorzugt 1 : 100 bis 1 : 1 eingesetzt. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

Gegenstand der Erfindung ist somit auch ein Verfahren gemäß Anspruch 3 zur Aktivierung von DMC-Katalysatoren, dadurch gekennzeichnet, dass
(α) unter Inertgasatmosphäre (beispielsweise Argon oder Stickstoff), unter einer Atmosphäre aus Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysators mit Heterokumulen und H-funktioneller Startersubstanz vermischt wird, und anschließend
(β) zu dem Gemisch aus Schritt (α) unter Inertgasatmosphäre (beispielsweise Argon oder Stickstoff), unter einer Atmosphäre aus Inertgas-Kohlendioxid-Gemisch oder unter einer reinen Kohlendioxid-Atmosphäre, Alkylenoxid bei Temperaturen von 90 bis 150°C, vorzugsweise von 125 bis 135°C zugegeben wird.

### Zu Schritt (α):

Die Zugabe der einzelnen Komponenten in Schritt (α) kann gleichzeitig oder nacheinander in beliebiger Reihenfolge erfolgen; bevorzugt wird in Schritt (α) zunächst unter Inertgasatmosphäre (beispielsweise Argon oder Stickstoff), unter einer Atmosphäre aus Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysators mit Heterokumulen vermischt und anschließend die H-funktionelle Startersubstanz zugesetzt. Alternativ kann unter Inertgasatmosphäre (beispielsweise Argon, Stickstoff und/oder Kohlendioxid) der DMC-Katalysator mit Heterokumulen und H-funktioneller Startersubstanz vermischt und die Mischung auf Temperaturen von 90 bis 150°C, vorzugsweise von 125 bis 135°C, aufgeheizt werden.

In einer besonders bevorzugten Ausführungsform wird in das resultierende Gemisch bei einer Temperatur von 90 bis 150°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer weiteren bevorzugten Ausführungsform wird in Schritt (α)
(α1) die H-funktionelle Startersubstanz oder ein Gemisch aus mindestens zwei H-funktionellen Startersubstanzen vorgelegt und
(α2) die Temperatur der Startersubstanz oder des Gemisches auf 50 bis 200°C, bevorzugt 80 bis 160°C, besonders bevorzugt bei 100 bis 140°C gebracht und/oder der Druck im Reaktor auf weniger als 500 mbar, bevorzugt 5 mbar bis 100 mbar erniedrigt wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,
wobei der Doppelmetallcyanid-Katalysator und Heterokumulen zu der H-funktionellen Startersubstanz oder dem Gemisch von mindestens zwei H-funktionellen Startersubstanzen in Schritt (α1) oder unmittelbar anschließend in Schritt (α2) zugesetzt werden.

Der DMC-Katalysator kann in fester Form oder als Suspension in einer H-funktionellen Startersubstanz zugegeben werden. Wird der Katalysator als Suspension zugegeben, wird diese bevorzugt in Schritt (α1) der H-funktionellen Startersubstanz(en) zugefügt.

In einer alternativen Ausführungsform wird das resultierende Gemisch bei einer Temperatur von 100°C bis 130°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

### Zu Schritt (β):

Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 10 mbar bis 100 bar, vorzugsweise 100 mbar bis 50 bar und bevorzugt 500 mbar bis 50 bar beträgt.

### Zu Schritt (γ):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Es ist möglich, während der Zugabe des Alkylenoxids den CO₂-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid Portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden können. Die Dosierung der Alkylenoxide kann simultan oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls CO₂-freie Polyether-Blöcke enthalten soll. Die Menge des Kohlendioxids (angegeben als Druck) kann bei der Zugabe der Alkylenoxide ebenso variieren. CO₂ kann auch als Feststoff in den Reaktor gegeben werden und dann unter den gewählten Reaktionsbedingungen in den gasförmigen, gelösten, flüssigen und/oder überkritischen Zustand übergehen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, kommt die Reaktion beinahe zum Erliegen. Bei Temperaturen oberhalb von 150°C steigt die Menge an unerwünschten Nebenprodukten stark an.

Die drei Schritte α, β und γ können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während dem Aktivierungsschritt (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew-%, höchst bevorzugt > 0 bis 15 Gew.-% (jeweils bezogen auf das Gewicht der Reaktionsmischung).

Eine weitere mögliche Ausführungsform im Rührkessel für die Copolymerisation (Schritt γ) ist dadurch gekennzeichnet, dass eine oder mehrere H-funktionellen Startersubstanzen während der Reaktion kontinuierlich in den Reaktor zudosiert werden. Die Menge der H-funktionellen Startersubstanzen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Startersubstanzen).

In einer bevorzugten Ausführungsform wird die gemäß den Schritten α und β aktivierte Katalysator-Starter-Mischung in demselben Reaktor weiter mit Alkylenoxiden und Kohlendioxid umgesetzt. In einer weiteren bevorzugten Ausführungsform wird die gemäß den Schritten α und β aktivierte Katalysator-Starter-Mischung in einem anderen Reaktionsbehältnis, (beispielsweise einem Rührkessel, Rohrreaktor oder Schlaufenreaktor) weiter mit Alkylenoxiden und Kohlendioxid umgesetzt.

Bei Reaktionsführung in einem Rohrreaktor werden die aktivierte Katalysator-Starter-Mischung und gegebenenfalls weiterer Starter sowie Alkylenoxide und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew-%, höchst bevorzugt > 0 bis 15 Gew.-% (jeweils bezogen auf das Gewicht der Reaktionsmischung) gehalten werden kann.

Um vollständigen Umsatz zu realisieren, ist dem Reaktionsapparat, in dem der Schritt γ durchgeführt wird, häufig ein weiterer Kessel oder ein Rohr ("Verweilrohr") nachgeschaltet, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt γ durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt γ ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C.

Die erfindungsgemäß erhaltenen Polyethercarbonatpolyole haben eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Als Heterokumulene werden Verbindungen, die mindestens eine funktionelle Gruppe ausgewählt aus der Gruppe bestehend aus Isocyanatgruppe (d.h. Verbindungen enthaltend mindestens eine O=C=N-Gruppe), Isothiocyanatgruppe (d.h. Verbindungen enthaltend mindestens eine S=C=N- Gruppe), Carbodiimide (d.h. Verbindungen enthaltend mindestens eine -N=C=N- Gruppe), Ketengruppe (d.h. Verbindungen enthaltend mindestens eine O=C=C< Gruppe), Thioketengruppe (d.h. Verbindungen enthaltend mindestens eine S=C=C< Gruppe) enthalten, eingesetzt. Dabei können die Isocyanatgruppe, die Isothiocyanatgruppe, die Carbodiimidgruppe, Ketengruppe und/oder Thioketengruppe auch Teil eines Oligomers oder Polymers sein. Beispielsweise kann als Heterokumulen Polycarbodiimid eingesetzt werden.

Besonders bevorzugt sind Isocyanate der Formel (II),

R¹-(-X-N=C=O)ₙ (II)

wobei R^{t} für einen n-valenten aliphatischen, aromatischen oder araliphatischen Rest mit 1 bis 36 Kohlenstoffatomen,
n für eine natürliche Zahl von 1 bis 6 und
X für eine chemische Bindung (Einfachbindung), eine -SO₂- oder eine -CO- Gruppe steht.

Beispiele für Verbindungen der Formel (II) sind Tosylisocyanat, Benzoylisocyanat, Acetylisocyanat, Carbonyldiisocyanat, Sulfonyldiisocyanat, Benzolsulfonylisocyanat, Methansulfonyldisocyanat, o-, m- und p-Phthaloyldiisocyanat, 4,4',4"-Triisocyanatophenylmethan, 4,4'-Methylendiisocyanat, 2,4'-Methylendiisocyanat, 2,2'-Methylendiisocyanat, 2,4-Toluylendiisocyanat, 2,6-Toluylendiisocyanat, m- und p-Phenylendiisocyanat, Diphenyldiisocyanat, 3,3'-Dimethyl-4,4'-diisocyanatodiphenyl, 3,4'-Diisocyanatodiphenylether, 4,4'-Diisocyanatodiphenylether, m- und p-Bisisocyanatomethylbenzol, 1,3- und 1,4-Bisisocyanatomethylcyclohexan, 1,3-Bis-(1-isocyanato-1-methylethyl)benzol, 1,6-Hexamethylendiisocyanat (HDI), 2,2,4-Trimethyl-1,6-Hexamethylendiisocyanat, Isophorondiisocyanat (IPDI), m-Tetramethylxylendiisocyanat (m-TMXDI), Bisisocyanatomethylnorbornan, Phenylisocyanat, Butylisocyanat und Methylisocyanat sowie Gemische aus diesen Substanzen.

Ebenfalls bevorzugt werden als Heterokumulene im erfindungsgemäßen Verfahren Verbindungen der Formeln (IIIa) und (IIIb) eingesetzt,

R²-N=C=N-R³ (IIIa)

OCN-R⁴-[-N=C=N-R⁴-]ₘ-NCO (IIIb)

wobei
R² und R³ für einen C1 bis C22 Alkyl-, einen C6-C18-Aryl- oder einen C7-C22 Aralkylrest,
R⁴ für einen divalenten C6-C36 aliphatischen, aromatischen oder araliphatischen Rest und
m für eine natürliche Zahl von 3 bis 300, vorzugsweise von 5 bis 50 stehen.

Beispiele für Verbindungen der Formel (IIIa) sind Dicyclohexylcarbodimid, Di-p-toluylcarbodiimid, Di-tert-butylcarbodiimid, Diisopropylcarbodiimid, tert-Butylethylcarbodiimid oder 3-Dimethylaminopropylethylcarbodiimid und deren jeweiliges Umsetzungsprodukt mit Methyliodid oder Methyltosylat. Auch die Carbodiimidgruppe selbst kann mit Alkylierungsreagentien, wie Methyliodid, Methyltosylat, Benzylbromid oder Dimethylsulfat, quarternisiert sein. Beispiele für Verbindungen der Formel (IIIb) sind Polycarbodiimide, die beispielsweise erhältlich sind aus der Polymerisation von Diisocyanaten (wie zum Beispiel 4,4'-Methylendiisocyanat, 2,4'-Methylendiisocyanat, 2,2'-Methylendiisocyanat, 2,4- Toluylendiisocyanat, 2,6-Toluylendiisocyanat, IPDI und m-TMXDI) in Gegenwart von cyclischen Phosphinoxiden als Polymerisationskatalysator.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1 - Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

Als geeignete **H-funktionelle Startersubstanz** können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine^{®} von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF^{®} der BASF, wie z. B. PolyTHF^{®} 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Acclaim^{®}-, Arcol^{®}-, Baycoll^{®}-, Bayfill^{®}-, Bayflex^{®}- Baygal^{®}-; PET^{®}- und Polyether-Polyole der Bayer MaterialScience AG (wie z. B. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen^{®} C-Typen der Bayer MaterialScience AG verwendet werden, wie z. B. Desmophen^{®} C 1100 oder Desmophen^{®} C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (IV),

HO-(CH₂)ₓ-OH (IV)

wobei x eine Zahl von 1 bis 20, bevorzugt eine gerade Zahl von 2 bis 20 ist. Beispiele für Alkohole gemäß Formel (IV) sind Ethylenglycol, 1,4-Butandiol, 1,6-Hexandiol, 1,8-Octandiol, 1,10-Decandiol, 1,12-Dodecandiol und der Alkohol der Dimersäure. Weitere bevorzugte H-funktionelle Startersubstanzen sind Neopentylglykol, Trimethylolpropan, Glycerin, Pentaerythrit, Umsetzungsprodukte der Alkohole gemäß Formel (IV) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startersubstanzen Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Startersubstanz verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man
(i) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (V),

M(X)ₙ (V)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (VI),

Mᵣ(X)₃ (VI)

wobei
M ausgewählt ist aus den Metallkationen Fe³⁺, Al³⁺, Co³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (VII),

M(X)ₛ (VII)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (VIII),

M(X)ₜ (VIII)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (IX)

(Y)ₐ M'(CN)_{b} (A)_{c} (IX)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺)und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (X)

Mₓ[M'ₓ,(CN)_{y}]_{z} (X)

worin M wie in Formel (V) bis (VIII) und
M' wie in Formel (IX) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen.Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

### Beispiele

Eingesetzte H-funktionelle Startersubstanzen (Starter):
PET-1 Polypropylenglykol mit einer OH-Zahl von 112 mg KOH/g

Der DMC-Katalysator wurde hergestellt nach Beispiel 6 von WO-A 01/80994.

Als Heterokumulene wurden eingesetzt:
DCC = Dicyclohexylcarbodiimid
TSI = Tosylisocyanat

Bei der Copolymerisation resultierte neben dem cyclischen Propylencarbonat das Polyethercarbonatpolyol, welches einerseits in Formel (XIa) gezeigte Polycarbonat-Einheiten enthält, 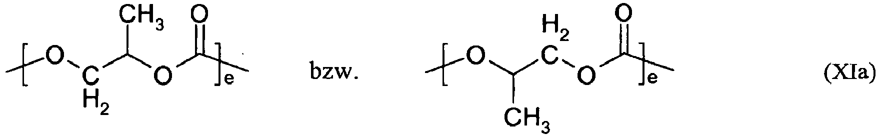 und andererseits in Formel (XIb) gezeigte Polyether-Einheiten enthält.

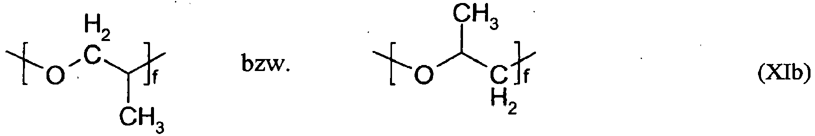

Die Charakterisierung des Reaktionsgemisches erfolgte durch ¹H-NMR Spektroskopie und Gelpermeations-Chromatographie:

Das Gewichts- und Zahlenmittel des Molekulargewichts der entstandenen Polymere wurden mittels Gelpermeations-Chromatographie (GPC) bestimmt. Es wurde vorgegangen nach DIN 55672-1: "Gelpermeationschromatographie,Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 µm; RID-Detektor). Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch N-Methylpyrrolidon anstelle von THF/Dichlormethan als Lösungsmittel verwendet wurde. Es wurde mit 0,5 molarer ethanolischer KOH Lösung titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Das Verhältnis der Menge an cyclischem Propylencarbonat zu Polyethercarbonatpolyol (Selektivität, c/1) und das molare Verhältnis von Carbonatgruppen zu Ethergruppen im Polyethercarbonatpolyol (Verhältnis e/f) sowie der Anteil des umgesetzten Propylenoxids (C in mol%) wurden mittels ¹H-NMR Spektroskopie bestimmt. Die Probe wurde jeweils in deuteriertem Chloroform gelöst und auf einem Spektrometer der Firma Bruker (AV400, 400 MHz, Pulsprogramm zg30, Wartezeit d1: 1 s, 16 scan) vermessen. Die relevanten Resonanzen im ¹H-NMR Spektrum (bezogen auf TMS = 0 ppm) sind wie folgt und wurden zur Integration verwendet:
- I1:: 1,11 - 1,17: Methylgruppe der Polyether-Einheiten, Fläche der Resonanz entspricht drei H Atomen
- I2:: 1,25 - 1,32: Methylgruppe der Polycarbonat-Einheiten, Fläche der Resonanz entspricht drei H Atomen
- I3:: 1,45 - 1,49: Methylgruppe des cyclischen Carbonats, Fläche der Resonanz entspricht drei H Atomen
- I4:: 2,95 - 2,99: CH Gruppe des freien, nicht abreagierten Propylenoxids, Fläche der Resonanz entspricht einem H Atom.

Unter Berücksichtigung der relativen Intensitäten wurden die Werte wie folgt berechnet: Molares Verhältnis der Menge an cyclischem Propylencarbonat zu Polymer (Selektivtät, c/1):

c/l = I3 / I2 (XII)

Molares Verhältnis von Carbonatgruppen zu Ethergruppen im Polymer (e/f):

e/f= I2 / I1 (XIII)

Der molare Anteil des umgesetzten Propylenoxids (C in mol%) bezogen auf die Summe der bei der Aktivierung und der Copolymerisation eingesetzten Menge an Propylenoxid, berechnet nach der Formel:

C = [((I1/3)+(I2/3)+(I3/3)) / ((I1/3)+(I2/3)+(I3/3)+I4)] * 100% (XIV)

lag bei den Beispielen zwischen 97,8 und >99,9%.

### Beispiel 1: Polymerisation von Propylenoxid und CO₂ mit einem TSI aktivierten DMC Katalysator

In einem 300 ml Druckreaktor wurde eine Mischung aus DMC-Katalysator (8 mg), TSI (0,5 mL) und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 7,5 g Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30 min bei 130°C gerührt (500 rpm) [Schritt (β)]. Nach Abkühlen auf 100°C wurden unter Rühren weitere 32,5 g Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert.
Die Selektivität c/l betrug 0,03.
Das molare Verhältnis von Carbonatgruppen zu Ethergruppen e/f betrug 49/51.

### Beispiel 2: Polymerisation von Propylenoxid und CO₂ mit einem DCC aktivierten DMC Katalysator

In einem 300ml Druckreaktor wurde eine Mischung aus DMC-Katalysator (8 mg), DCC (9,2 mg) und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 7,5 g Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30 min bei 130°C gerührt (500 rpm) [Schritt (β)]. Nach Abkühlen auf 100°C wurden unter Rühren weitere 32,5 g Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert.
Die Selektivität c/l betrug 0,05.
Das molare Verhältnis von Carbonatgruppen zu Ethergruppen e/f betrug 33/67.

### Vergleichsbeispiel 3: Polymerisation von Propylenoxid und CO₂ mit einem ohne Zusatz von Heterokumulenen aktivierten DMC Katalysator

In einem 300ml Druckreaktor wurde eine Mischung aus DMC-Katalysator (8 mg) und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 7,5 g Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30 min bei 130°C gerührt (500 rpm) [Schritt (β)]. Nach Abkühlen auf 100°C wurden unter Rühren weitere 32,5 g Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert.
Die Selektivität c/l betrug 0,05.
Das molare Verhältnis von Carbonatgruppen zu Ethergruppen e/f betrug 27/73.

Eine Gegenüberstellung der Beispiele 1 und 2 mit dem Vergleichsbeispiel 3 (Tabelle 1) zeigt, dass die Anwesenheit von Heterokumulenen in der ersten Aktivierungsstufe zu einem höheren CO₂-Einbau und tendenziell zu einem geringeren Gehalt an cyclischen Carbonaten führt.

**Tabelle 1: Resultate der Beispiele 1 bis 3**

| Beispiel | Heterokumulen | n(Heterokumulen) [mmol] | e/f | c/l | Mₙ [g/mol] |
|---|---|---|---|---|---|
| 1 | TSI | 3,27 | 49/51 | 0,03 | 5 700 |
| 2 | DCC | 0,05 | 33/67 | 0,05 | 7 100 |
| 3 (Vgl.) | - | - | 27/73 | 0,05 | 16 500 |

| | | | | | |
|---|---|---|---|---|---|
| n(Heterokumulen). Stoffmenge an Heterokumulen Mₙ: zahlengemitteltes Molekulargewicht Vgl.: Vergleichsbeispiel | | | | | |

### Beispiele 4 bis 7: Polymerisation von Propylenoxid und CO₂ mit einem TSI aktivierten DMC Katalysator unter Variation der TSI Konzentration

In einem 300 ml Druckreaktor wurde eine Mischung aus DMC-Katalysator (8 mg), TSI in der jeweils in Tabelle 2 angegebenen Menge (n_{TSI}) und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 7,5 g Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30min bei 130°C gerührt (500 rpm) [Schritt (β)]. Nach Abkühlen auf 100°C wurden unter Rühren weitere 32,5 g Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert. Die Ergebnisse der Charakterisierung des Produkts sind in der nachfolgenden Tabelle 2 zusammengefasst.

**Tabelle 2: Variation der TSI-Konzentration**

| Beispiel | n(TSI) [mmol] | e/f | c/l | Mₙ [g/mol] |
|---|---|---|---|---|
| 4 | 0,33 | 25/75 | 0,05 | 9 800 |
| 5 | 0,80 | 41/59 | 0,05 | 9 400 |
| 6 | 1,31 | 32/68 | 0,03 | 3 900 |
| 7 | 2,30 | 33/67 | 0,09 | 8 300 |
| 1 | 3,27 | 49/51 | 0,03 | 5 700 |

| | | | | |
|---|---|---|---|---|
| n(TSI). Stoffmenge an TSI Mₙ: zahlengemitteltes Molekulargewicht | | | | |

### Beispiele 8 bis 10: Polymerisation von Propylenoxid und CO₂ mit einem DCC aktivierten DMC Katalysator unter Variation der DCC Konzentration

In einem 300ml Druckreaktor wurde eine Mischung aus DMC-Katalysator (8 mg), DCC und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 7,5 g Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30 min bei 130°C gerührt (500 rpm) [Schritt (β)]. Nach Abkühlen auf 100°C wurden unter Rühren weitere 32,5 g Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert. Die Ergebnisse der Charakterisierung des Produkts sind in der nachfolgenden Tabelle 3 zusammengefasst

**Tabelle 3: Variation der DCC-Konzentration**

| Beispiel | n(DCC) [mmol] | e/f | c/l | Mₙ [g/mol] |
|---|---|---|---|---|
| 2 | 0,05 | 33/67 | 0,05 | 7 100 |
| 8 | 1,69 | 37/63 | 0,03 | 12 100 |
| 9 | 3,31 | 26/74 | 0,03 | 13 500 |
| 10 | 6,55 | 29/71 | 0,02 | 9 000 |

| | | | | |
|---|---|---|---|---|
| n(DCC). Stoffmenge an DCC Mₙ: zahlengemitteltes Molekulargewicht | | | | |

### Beispiele 11 bis 18: Polymerisation von Propylenoxid und CO₂ mit einem aktivierten DMC Katalysator unter Variation der Kettenlänge des Produkts

In einem 300ml Druckreaktor wurde eine Mischung aus DMC-Katalysator (8 mg), ggf. das Heterokumulen in der in Tabelle 3 angegebenen Art und Menge, und PET-1 (3 g) vorgelegt und 30 min bei 130°C unter leichtem Vakuum (500 mbar) und leichtem Ar-Strom gerührt (500 rpm) [Schritt (α)]. Nach Aufpressen von 15 bar CO₂ wurden 15 Gew.-% der in Tabelle 3 jeweils angegebenen Menge an Propylenoxid mit Hilfe einer HPLC-Pumpe (1 mL/min) zudosiert. Im Folgenden wurde der Druck im Reaktor durch Nachdosieren von CO₂ bei 15 bar gehalten. Die Reaktionsmischung wurde 30 min bei 130°C gerührt (500 rpm) [Schritt (β)]. Nach Abkühlen auf 100°C wurde unter Rühren die verbleibende Menge von 85 Gew.-% Propylenoxid über eine HPLC-Pumpe (1 mL/min) zudosiert. Man rührte anschließend noch 2,5 h bei 100°C [Schritt (γ)]. Durch Abkühlen im Eisbad wurde die Reaktion beendet, der Überdruck abgelassen und das resultierende Produkt analysiert. Die Ergebnisse der Charakterisierung des Produkts sind in der nachfolgenden Tabelle 4 zusammengefasst.

**Tabelle 4: Variation des Molekulargewichts (der Kettenlänge) des resultierenden Polyethercarbonatpolyols**

| Beispiel | Heterokumulen | n(Heterokumulen) [mmol] | Menge Propylenoxid [g] | e/f | c/l | Mₙ (g/mol) |
|---|---|---|---|---|---|---|
| 11 (Vgl.) | -- | -- | 4,75 | 5/95 | 0,12 | 2 700 |
| 12 (Vgl.) | -- | -- | 9,50 | 8/92 | 0,15 | 5 100 |
| 13 (Vgl.) | -- | -- | 20,00 | 7/93 | 0,10 | 8 500 |
| 3 (Vgl.) | -- | -- | 40,00 | 27/73 | 0,05 | 16 500 |
| 14 (Vgl.) | -- | -- | 80,00 | 28/72 | 0,08 | 22 200 |
| 15 | TSI | 3,27 | 4,75 | 35/65 | 0,09 | 3 250 |
| 16 | DCC | 1,69 | 9,50 | 35/65 | 0,07 | 3 400 |
| 17 | DCC | 1,69 | 20,00 | 34/66 | 0,06 | 6 900 |
| 8 | DCC | 1,69 | 40,00 | 37/63 | 0,03 | 17 300 |
| 18 | DCC | 1,69 | 80,00 | 32/68 | 0,04 | 25 300 |

| | | | | | | |
|---|---|---|---|---|---|---|
| n(Heterokumulen). Stoffmenge an Heterokumulen Mₙ: zahlengemitteltes Molekulargewicht Vgl.: Vergleichsbeispiel | | | | | | |

## Patentansprüche

1. Verfahren zur Herstellung von Polyethercarbonatpolyolen aus einer oder mehreren H-funktionellen Startersubstanzen, eines oder mehrerer Alkylenoxiden und Kohlendioxid in Gegenwart eines Doppelmetallcyanid-Katalysators, **dadurch gekennzeichnet, dass**
(α) unter Inertgasatmosphäre, unter einer Atmosphäre aus Inertgas-Kohlendioxid-Gemisch oder unter einer reinen Kohlendioxid-Atmosphäre bei Temperaturen von 90 bis 150°C der DMC-Katalysator mit Heterokumulen und H-funktioneller Startersubstanz vermischt wird,
(β) zu dem Gemisch aus Schritt (α) unter Inertgasatmosphäre, unter einer Atmosphäre aus Inertgas-Kohlendioxid-Gemisch oder unter einer reinen Kohlendioxid-Atmosphäre Alkylenoxid bei Temperaturen von 100 bis 150°C zugegeben wird, und
(γ) ein oder mehrere Alkylenoxide und Kohlendioxid zu der aus Schritt (β) resultierenden Mischung fortwährend dosiert werden,
**dadurch gekennzeichnet, dass** als Heterokumulen
Verbindungen, die mindestens eine Isothiocyanatgruppe als funktionelle Gruppe enthalten, Verbindungen der Formel (II),
R¹-(-X-N=C=O)ₙ (II)
wobei R¹ für einen n-valenten aliphatischen, aromatischen oder araliphatischen Rest mit 1 bis 36 Kohlenstoffatomen,
n für eine natürliche Zahl von 1 bis 6 und
X für eine Einfachbindung, eine -SO₂- oder eine -CO- Gruppe steht,
oder
Verbindungen der Formeln (IIIa) und (IIIb),
R²-N=C=N-R³ (IIIa)
OCN-R⁴-[-N=C=N-R⁴-]ₘ-NCO (IIIb)
wobei
R² und R³ für einen C1 bis C22 Alkyl-, einen C6-C18-Aryl- oder einen C7-C22 Aralkylrest,
R⁴ für einen divalenten C6-C36 aliphatischen, aromatischen oder araliphatischen Rest und
m für eine natürliche Zahl von 3 bis 300 stehen,
eingesetzt werden.

2. Verfahren gemäß Anspruch 1, wobei Schritt (γ) bei 90 bis 130°C durchgeführt wird.

3. Verfahren zur Aktivierung von DMC-Katalysatoren, **dadurch gekennzeichnet, dass**
(α) unter Inertgasatmosphäre, unter einer Atmosphäre aus Inertgas-Kohlendioxid-Gemisch oder unter einer reinen Kohlendioxid-Atmosphäre der DMC-Katalysator mit Heterokumulen und H-funktioneller Startersubstanz vermischt wird, und anschließend
(β) zu dem Gemisch aus Schritt (α) unter Inertgasatmosphäre, unter einer Atmosphäre aus Inertgas-Kohlendioxid-Gemisch oder unter einer reinen Kohlendioxid-Atmosphäre Alkylenoxid bei Temperaturen von 90 bis 150°C zugegeben wird
**dadurch gekennzeichnet, dass** als Heterokumulen
Verbindungen, die mindestens eine Isothiocyanatgruppe als funktionelle Gruppe enthalten, Verbindungen der Formel (II),
R¹-(-X-N=C=O)ₙ (II)
wobei R¹ für einen n-valenten aliphatischen, aromatischen oder araliphatischen Rest mit 1 bis 36 Kohlenstoffatomen,
n für eine natürliche Zahl von 1 bis 6 und
X für eine Einfachbindung, eine -SO₂- oder eine -CO- Gruppe steht,
oder
Verbindungen der Formeln (IIIa) und (IIIb),
R²-N=C=N-R³ (IIIa)
OCN-R⁴-[-N=C=N-R⁴-]ₘ-NCO (IIIb)
wobei
R² und R³ für einen C1 bis C22 Alkyl-, einen C6-C18-Aryl- oder einen C7-C22 Aralkylrest,
R⁴ für einen divalenten C6-C36 aliphatischen, aromatischen oder araliphatischen Rest und
m für eine natürliche Zahl von 3 bis 300 stehen,
eingesetzt werden.

4. Verfahren gemäß einem der Ansprüche 1 bis 3, wobei in Schritt (α)
(α1) die H-funktionelle Startersubstanz oder ein Gemisch aus mindestens zwei H-funktionellen Startersubstanzen vorgelegt wird und
(α2) die Temperatur der Startersubstanz oder des Gemisches auf 50 bis 200°C gebracht wird und/oder der Druck im Reaktor auf weniger als 500 mbar eingestellt wird,
wobei der Doppelmetallcyanid-Katalysator und Heterokumulen zu der H-funktionellen Startersubstanz oder dem Gemisch von mindestens zwei H-funktionellen Startersubstanzen in Schritt (α1) oder anschließend während Schritt (α2) zugesetzt wird.

5. Verfahren gemäß einem der Ansprüche 1 bis 4, wobei die in Schritt (β) eingesetzte Teilmenge von einem oder mehrerer Alkylenoxiden 0,1 bis 25,0 Gew.-% (bezogen auf die im Schritt (α) eingesetzte Menge an Startersubstanz) beträgt.

6. Verfahren gemäß einem der Ansprüche 1 bis 5, wobei als Heterokumulen mindestens eine Verbindung ausgewählt aus der Gruppe bestehend aus Tosylisocyanat, Benzoylisocyanat, Acetylisocyanat, Carbonyldiisocyanat, Sulfonyldiisocyanat, Benzolsulfonylisocyanat, Methansulfonyldisocyanat, o-, m- und p-Phthaloyldiisocyanat, 4,4',4"-Triisocyanatophenylmethan, 4,4'-Methylendiisocyanat, 2,4'-Methylendiisocyanat, 2,2'-Methylendiisocyanat, 2,4-Toluylendiisocyanat, 2,6-Toluylendiisocyanat, m- und p-Phenylendiisocyanat, Diphenyldiisocyanat, 3,3'-Dimethyl-4,4'-diisocyanatodiphenyl, 3,4'-Diisocyanatodiphenylether, 4,4'-Diisocyanatodiphenylether, m- und p-Bisisocyanatomethylbenzol, 1,3- und 1,4-Bisisocyanatomethylcyclohexan, 1,3-Bis-(1-isocyanato-1-methylethyl)benzol, 1,6-Hexamethylendiisocyanat (HDI), 2,2,4-Trimethyl-1,6-Hexamethylendiisocyanat, Isophorondiisocyanat (IPDI), m-Tetramethylxylendiisocyanat (m-TMXDI), Bisisocyanatomethylnorbornan, Phenylisocyanat, Butylisocyanat und Methylisocyanat, Dicyclohexylcarbodimid, Di-p-toluylcarbodiimid, Di-tert-butylcarbodiimid, Diisopropylcarbodiimid, tert-Butylethylcarbodiimid und 3-Dimethylaminopropylethylcarbodiimid eingesetzt wird.

7. Verfahren gemäß einem der Ansprüche 1 bis 6, wobei die eingesetzten H-funktionellen Startersubstanzen ausgewählt sind aus mindestens einer der Gruppe bestehend aus Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und C₁-C₂₄ Alkyl-Fettsäureester, die im Mittel mindestens 2 OH-Gruppen pro Molekül enthalten.

8. Verfahren gemäß einem der Ansprüche 1 bis 7, wobei die eingesetzten H-funktionellen Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist und die Polyetherpolyole ein Molekulargewicht Mn im Bereich von 62 bis 4500 g/mol und eine Funktionalität von 2 bis 3 aufweisen.

9. Verfahren gemäß einem der Ansprüche 1 bis 8, wobei der eingesetzte Doppelmetallcyanid-Katalysator mindestens eine Doppelcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

10. Verfahren gemäß einem der Ansprüche 1 bis 9, wobei der eingesetzte Doppelmetallcyanid-Katalysator zusätzlich mindestens einen organischen Komplexliganden ausgewählt aus der Gruppe bestehend aus aliphatischem Ether, Ethanol, Isopropanol, n-Butanol, iso-Butanol, sek.-Butanol, tert-Butanol, 2-Methyl-3-buten-2-ol, 2-Methyl-3-butin-2-ol, Ethylenglykol-mono-tert.-butylether, Diethylenglykol-mono-tert.-butylether, Tripropylenglykol-mono-methylether und 3-Methyl-3-oxetan-methanol enthält.

11. Verfahren gemäß einem der Ansprüche 1 bis 10, welches in einem Rohrreaktor, Rührkessel oder Schlaufenreaktor durchgeführt wird.

12. Verfahren gemäß Anspruch 1 oder 2, **dadurch gekennzeichnet, dass** es in einem Rührkessel durchgeführt wird und dass in Schritt (γ) eine oder mehrere H-funktionellen Startersubstanzen während der Reaktion kontinuierlich in den Rührkessel zudosiert werden.

## Claims

1. Process for the preparation of polyether carbonate polyols from one or more H-functional starter substances, one or more alkylene oxides and carbon dioxide in the presence of a double metal cyanide catalyst,
**characterized in that**
(α) under an inert gas atmosphere, under an atmosphere of an inert gas/carbon dioxide mixture or under a pure carbon dioxide atmosphere, at temperatures of from 90 to 150 °C, the DMC catalyst is mixed with a heterocumulene and H-functional starter substance,
(β) alkylene oxide is added at temperatures of from 100 to 150 °C to the mixture from step (α) under an inert gas atmosphere, under an atmosphere of an inert gas/carbon dioxide mixture or under a pure carbon dioxide atmosphere, and
(γ) one or more alkylene oxides and carbon dioxide are metered continuously into the mixture resulting from step (β),
**characterized in that**
compounds which contain at least one isothiocyanate group as functional group,
compounds of the formula (II)
R¹-(-X-N=C=O)ₙ (II)
wherein R¹ represents an n-valent aliphatic, aromatic or araliphatic radical having 1 to 36 carbon atoms,
n represents a natural number from 1 to 6 and
X represents a single bond, an -SO₂- or a -CO- group,
or
compounds of the formulae (IIIa) and (IIIb)
R²-N=C=N-R³ (IIIa)
OCN-R⁴-[-N=C=N-R⁴-]ₘ-NCO (IIIb)
wherein
R² and R³ represent a C1 to C22 alkyl, a C6-C18 aryl or a C7-C22 aralkyl radical,
R⁴ represents a divalent C6-C36 aliphatic, aromatic or araliphatic radical and m represents a natural number from 3 to 300
are employed as the heterocumulene.

2. Process according to claim 1, wherein step (γ) is carried out at 90 to 130 °C.

3. Process for activation of DMC catalysts, **characterized in that**
(α) under an inert gas atmosphere, under an atmosphere of an inert gas/carbon dioxide mixture or under a pure carbon dioxide atmosphere, the DMC catalyst is mixed with a heterocumulene and H-functional starter substance, and subsequently
(β) alkylene oxide is added at temperatures of from 90 to 150 °C to the mixture from step (α) under an inert gas atmosphere, under an atmosphere of an inert gas/carbon dioxide mixture or under a pure carbon dioxide atmosphere
**characterized in that**
compounds which contain at least one isothiocyanate group as functional group,
compounds of the formula (II)
R¹-(-X-N=C=O)ₙ (II)
wherein R¹ represents an n-valent aliphatic, aromatic or araliphatic radical having 1 to 36 carbon atoms,
n represents a natural number from 1 to 6 and
X represents a single bond, an -SO₂- or a -CO- group,
or
compounds of the formulae (IIIa) and (IIIb)
R²-N=C=N-R³ (IIIa)
OCN-R⁴-[-N=C=N-R⁴-]ₘ-NCO (IIIb)
wherein
R² and R³ represent a C1 to C22 alkyl, a C6-C18 aryl or a C7-C22 aralkyl radical,
R⁴ represents a divalent C6-C36 aliphatic, aromatic or araliphatic radical and m represents a natural number from 3 to 300
are employed as the heterocumulene.

4. Process according to one of claims 1 to 3, wherein in step (α)
(α1) the H-functional starter substance or a mixture of at least two H-functional starter substances is initially introduced and
(α2) the temperature of the starter substance or of the mixture is brought to 50 to 200 °C and/or the pressure in the reactor is adjusted to less than 500 mbar,
the double metal cyanide catalyst and heterocumulene being added to the H-functional starter substance or the mixture of at least two H-functional starter substances in step (α1) or subsequently during step (α2).

5. Process according to one of claims 1 to 4, wherein the part amount of one or more alkylene oxides employed in step (β) is 0.1 to 25.0 wt.% (based on the amount of starter substance employed in step (α)).

6. Process according to one of claims 1 to 5, wherein at least one compound chosen from the group consisting of tosyl isocyanate, benzoyl isocyanate, acetyl isocyanate, carbonyl-diisocyanate, sulfonyl-diisocyanate, benzenesulfonyl isocyanate, methanesulfonyl-diisocyanate, o-, m- and p-phthaloyl-diisocyanate, 4,4',4"-triisocyanatophenylmethane, 4,4'-methylene-diisocyanate, 2,4'-methylene-diisocyanate, 2,2'-methylene-diisocyanate, 2,4-toluylene-diisocyanate, 2,6-toluylene-diisocyanate, m- and p-phenylenediisocyanate, diphenyl-diisocyanate, 3,3'-dimethyl-4,4'-diisocyanatodiphenyl, 3,4'-diisocyanatodiphenyl ether, 4,4'-diisocyanatodiphenyl ether, m- and p-bisisocyanatomethylbenzene, 1,3- and 1,4-bisisocyanatomethylcyclohexane, 1,3-bis-(1-isocyanato-1-methylethyl)benzene, 1,6-hexamethylene-diisocyanate (HDI), 2,2,4-trimethyl-1,6-hexamethylene-diisocyanate, isophorone-diisocyanate (IPDI), m-tetramethylxylene-diisocyanate (m-TMXDI), bisisocyanatomethylnorbornane, phenyl isocyanate, butyl isocyanate and methyl isocyanate, dicyclohexylcarbodiimide, di-p-toluylcarbodiimide, di-tert-butylcarbodiimide, diisopropylcarbodiimide, tert-butylethylcarbodiimide and 3-dimethylaminopropylethylcarbodiimide is employed as the heterocumulene.

7. Process according to one of claims 1 to 6, wherein the H-functional starter substances employed are chosen from at least one of the group consisting of alcohols, amines, thiols, amino alcohols, thioalcohols, hydroxy esters, polyether polyols, polyester polyols, polyester ether polyols, polycarbonate polyols, polyether carbonate polyols, polyethyleneimines, polyether-amines, polytetrahydrofurans, polyether thiols, polyacrylate polyols, castor oil, the mono- or diglyceride of ricinoleic acid, monoglycerides of fatty acids, and chemically modified mono-, di- and/or triglycerides of fatty acids and C₁-C₂₄-alkyl fatty acid esters which contain on average at least 2 OH groups per molecule.

8. Process according to one of claims 1 to 7, wherein the H-functional starter substances employed are chosen from at least one of the group consisting of ethylene glycol, propylene glycol, 1,3-propanediol, 1,3-butanediol, 1,4-butanediol, 1,5-pentanediol, 2-methylpropane-1,3-diol, neopentyl glycol, 1,6-hexanediol, 1,8-octanediol, diethylene glycol, dipropylene glycol, glycerol, trimethylolpropane, di- and trifunctional polyether polyols, wherein the polyether polyol is built up from a di- or tri-H-functional starter substance and propylene oxide or a di- or tri-H-functional starter substance, propylene oxide and ethylene oxide and the polyether polyols have a molecular weight Mn in the range of from 62 to 4,500 g/mol and a functionality of from 2 to 3.

9. Process according to one of claims 1 to 8, wherein the double metal cyanide catalyst employed contains at least one double cyanide compound chosen from the group consisting of zinc hexacyanocobaltate(III), zinc hexacyanoiridate(III), zinc hexacyanoferrate(III) and cobalt(II) hexacyanocobaltate(III).

10. Process according to one of claims 1 to 9, wherein the double metal cyanide catalyst employed additionally contains at least one organic complexing ligand chosen from the group consisting of aliphatic ethers, ethanol, isopropanol, n-butanol, iso-butanol, sec-butanol, tert-butanol, 2-methyl-3-buten-2-ol, 2-methyl-3-butyn-2-ol, ethylene glycol mono-tert-butyl ether, diethylene glycol mono-tert-butyl ether, tripropylene glycol monomethyl ether and 3-methyl-3-oxetane-methanol.

11. Process according to one of claims 1 to 10, which is carried out in a tube reactor, stirred tank or loop reactor.

12. Process according to claim 1 or 2, **characterized in that** it is carried out in a stirred tank and **in that** in step (γ) one or more H-functional starter substances are metered continuously into the stirred tank during the reaction.

## Revendications

1. Procédé pour la préparation de polyéthercarbonatepolyols à partir d'une ou de plusieurs substances de départ à fonction H, d'un ou de plusieurs oxydes d'alkylène et de dioxyde de carbone en présence d'un catalyseur de type cyanure bimétallique, **caractérisé en ce que**
(α) on mélange sous une atmosphère consistant en un gaz inerte, sous une atmosphère constituée d'un mélange de gaz inerte-dioxyde de carbone ou sous une atmosphère consistant en dioxyde de carbone pur, à des températures de 90 à 150 °C, le catalyseur DMC avec un hétérocumulène et une substance de départ à fonction H,
(β) on ajoute un oxyde d'alkylène au mélange provenant de l'étape (α), sous une atmosphère consistant en un gaz inerte, sous une atmosphère constituée d'un mélange de gaz inerte-dioxyde de carbone ou sous une atmosphère consistant en dioxyde de carbone pur, à des températures de 100 à 150 °C, et
(γ) on ajoute en continu par addition dosée un ou plusieurs oxydes d'alkylène et du dioxyde de carbone au mélange résultant de l'étape (β),
**caractérisé en ce qu'**on utilise comme hétérocumulène
des composés qui contiennent comme groupe fonctionnel au moins un groupe isothiocyanate,
des composés de formule (II),
R¹-(-X-N=C=O)ₙ (II)
où R¹ représente un radical aliphatique, aromatique ou araliphatique n-valent ayant de 1 à 36 atomes de carbone,
n représente un nombre naturel valant de 1 à 6 et
X représente une liaison simple, un groupe -SO₂- ou un groupe -CO-,
ou
des composés de formules (IIIa) et (IIIb),
R²-N=C=N-R³ (IIIa)
OCN-R⁴-[-N=C=N-R⁴-]ₘ-NCO (IIIb)
où
R² et R³ représentent un radical alkyle en C₁-C₂₂, un radical aryle en C₆-C₁₈ ou un radical aralkyle en C₇-C₂₂,
R⁴ représente un radical aliphatique, aromatique ou araliphatique divalent en C₆-C₃₆ et
m représente un nombre naturel valant de 3 à 300.

2. Procédé selon la revendication 1, dans lequel on effectue l'étape (γ) à une température de 90 à 130 °C.

3. Procédé pour l'activation de catalyseurs DMC, **caractérisé en ce que**
(α) on mélange sous une atmosphère consistant en un gaz inerte, sous une atmosphère constituée d'un mélange de gaz inerte-dioxyde de carbone ou sous une atmosphère consistant en dioxyde de carbone pur, le catalyseur DMC avec un hétérocumulène et une substance de départ à fonction H, et ensuite
(β) on ajoute un oxyde d'alkylène au mélange provenant de l'étape (α), sous une atmosphère consistant en un gaz inerte, sous une atmosphère constituée d'un mélange de gaz inerte-dioxyde de carbone ou sous une atmosphère consistant en dioxyde de carbone pur, à des températures de 90 à 150 °C,
**caractérisé en ce qu'**on utilise comme hétérocumulène
des composés qui contiennent comme groupe fonctionnel au moins un groupe isothiocyanate,
des composés de formule (II),
R¹-(-X-N=C=O)ₙ (II)
où R¹ représente un radical aliphatique, aromatique ou araliphatique n-valent ayant de 1 à 36 atomes de carbone,
n représente un nombre naturel valant de 1 à 6 et
X représente une liaison simple, un groupe -SO₂- ou un groupe -CO-,
ou
des composés de formules (IIIa) et (IIIb),
R²-N=C=N-R³ (IIIa)
OCN-R⁴-[-N=C=N-R⁴-]ₘ-NCO (IIIb)
où
R² et R³ représentent un radical alkyle en C₁-C₂₂, un radical aryle en C₆-C₁₈ ou un radical aralkyle en C₇-C₂₂,
R⁴ représente un radical aliphatique, aromatique ou araliphatique divalent en C₆-C₃₆ et
m représente un nombre naturel valant de 3 à 300.

4. Procédé selon l'une quelconque des revendications 1 à 3, dans lequel dans l'étape (α)
(α1) on dispose au préalable la substance de départ à fonction H ou un mélange d'au moins deux substances de départ à fonction H et
(α2) on porte la température de la substance de départ ou du mélange à 50 à 200 °C et/ou on règle la pression dans le réacteur à moins de 500 mbars, en ajoutant dans l'étape (α1) ou ensuite pendant l'étape (α2) le catalyseur de type cyanure bimétallique et l'hétérocumulène à la substance de départ à fonction H ou au mélange d'au moins deux substances de départ à fonction H.

5. Procédé selon l'une quelconque des revendications 1 à 4, dans lequel la quantité partielle d'un ou de plusieurs oxydes d'alkylène utilisée dans l'étape (β) vaut de 0,1 à 25,0 % en poids (par rapport à la quantité de substance de départ utilisée dans l'étape (α)).

6. Procédé selon l'une quelconque des revendications 1 à 5, dans lequel on utilise comme hétérocumulène au moins un composé choisi dans le groupe constitué par l'isocyanate de tosyle, l'isocyanate de benzoyle, l'isocyanate d'acétyle, le diisocyanate de carbonyle, le diisocyanate de sulfonyle, l'isocyanate de benzènesulfonyle, le diisocyanate de méthanesulfonyle, le diisocyanate d'o-, m- et p-phtaloyle, le 4,4',4"-triisocyanatophénylméthane, le 4,4'-méthylène-diisocyanate, le 2,4'-méthylène-diisocyanate, le 2,2'-méthylène-diisocyanate, le 2,4-toluylène-diisocyanate, le 2,6-toluylène-diisocyanate, le m- et le p-phénylène-diisocyanate, le diisocyanate de diphényle, le 3,3'-diméthyl-4,4'-diisocyanatodiphényle, le 3,4'-diisocyanatodiphényléther, le 4,4'-diisocyanatodiphényléther, le m- et le p-bis-isocyanatométhylbenzène, le 1,3- et le 1,4-bis-isocyanatométhylcyclohexane, le 1,3-bis-(1-isocyanato-I-méthyléthyl)benzène, le 1,6-hexaméthylènediisocyanate (HDI), le 2,2,4-triméthyl-1,6-hexaméthylènediisocyanate, l'isophorone-diisocyanate (IPDI), le m-tétraméthylxylènediisocyanate (m-TMXDI), le bisisocyanatométhylnorbornane, l'isocyanate de phényle, l'isocyanate de butyle et l'isocyanate de méthyle, le dicyclohexylcarbodimide, le di-p-toluylcarbodiimide, le di-tert-butylcarbodiimide, le diisopropylcarbodiimide, le tert-butyléthylcarbodiimide et le 3-diméthylamino-propyléthylcarbodiimide.

7. Procédé selon l'une quelconque des revendications 1 à 6, dans lequel les substances de départ à fonction H utilisées sont choisies dans au moins l'un des groupes constitué par des alcools, amines, thiols, aminoalcools, thioalcools, hydroxyesters, polyétherpolyols, polyesterpolyols, polyesterétherpolyols, polycarbonatepolyols, polyéthercarbonatepolyols, polyéthylène-imines, polyétheramines, polytétrahydrofuranes, polyétherthiols, polyacrylatepolyols, l'huile de ricin, le mono- ou diglycéride d'huile de ricin, les monoglycérides d'acides gras, des mono-, di- et/ou triglycérides modifiés chimiquement d'acides gras et des esters alkyliques en C₁-C₂₄ d'acides gras qui contiennent en moyenne au moins 2 groupes OH par molécule.

8. Procédé selon l'une quelconque des revendications 1 à 7, dans lequel les substances de départ à fonction H utilisées sont choisies parmi au moins l'une du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, le glycérol, le triméthylolpropane, des polyétherpolyols di- et trifonctionnels, le polyétherpolyol étant formé à partir d'une substance de départ à deux ou trois fonctions H et d'oxyde de propylène ou d'une substance de départ à deux ou trois fonctions H, d'oxyde de propylène et d'oxyde d'éthylène et les polyétherpolyols présentant une masse moléculaire Mn dans la plage de 62 à 4 500 g/mole et une fonctionnalité de 2 à 3.

9. Procédé selon l'une quelconque des revendications 1 à 8, dans lequel le catalyseur de type cyanure bimétallique utilisé comporte au moins un composé de type cyanure double choisi dans le groupe constitué par l'hexacyanocobaltate(III) de zinc, l'hexacyano-iridate(III) de zinc, l'hexacyanoferrate(III) de zinc et l'hexacyanocobaltate(III) de cobalt(II).

10. Procédé selon l'une quelconque des revendications 1 à 9, dans lequel le catalyseur de type cyanure bimétallique utilisé comporte en outre au moins un ligand complexant organique choisi dans le groupe constitué par des éthers aliphatiques, l'éthanol, l'isopropanol, le n-butanol, l'isobutanol, le sec-butanol, le tert-butanol, le 2-méthyl-3-butène-2-ol, le 2-méthyl-3-butyn-2-ol, l'éther mono-tert-butylique d'éthylèneglycol, l'éther mono-tert-butylique de diéthylèneglycol, l'éther mono-méthylique de tripropylènglycol et le 3-méthyl-3-oxétane-méthanol.

11. Procédé selon l'une quelconque des revendications 1 à 10, qui est effectué dans un réacteur tubulaire, un récipient à agitation ou un réacteur à circulation en boucle.

12. Procédé selon la revendication 1 ou 2, **caractérisé en ce qu'**on l'effectue dans un récipient à agitation et **en ce que** dans l'étape (γ) on introduit en continu par addition dosée pendant la réaction dans le récipient à agitation une ou plusieurs substances de départ à fonction H.
